# EUROPÄISCHE PATENTSCHRIFT

(11) **EP 2 263 857 B1**
(45) Veröffentlichungstag und Bekanntmachung des Hinweises auf die Patenterteilung: **26.12.2018**
(21) Anmeldenummer: 10163370.9
(22) Anmeldetag: 20.05.2010
(51) Int. Cl.: B29C 51/00, B29C 51/30, B32B 27/32, C08L 23/08, C08L 23/14, B29K 23/00, B29C 33/42, B29C 47/00, B29C 59/00

(54) **Verfahren zur Herstellung eines Formkörpers**
Method of manufacturing a moulded body
Méthode de fabrication d'un corps moulé

(30) Priorität: 18.06.2009 DE 102009025995
(43) Veröffentlichungstag der Anmeldung: 22.12.2010
(73) Patentinhaber: Benecke-Kaliko AG, 30419 Hannover (DE)
(72) Erfinder: Bühring, Jürgen, 30900 Wedemark (DE); Hülsewede, Volker, 73114 Schlat (DE); Mani, Joseph, 73054 Eislingen (DE)
(74) Vertreter: Finger, Karsten

(56) Entgegenhaltungen:
- JP-A- 2006 082 472
- US-A- 5 948 867
- US-A1- 2008 193 684
- US-B1- 6 207 761

## Beschreibung

Die Erfindung betrifft ein Verfahren zur Herstellung eines Formkörpers mit einer dreidimensional strukturierten Oberfläche für die Innenverkleidung von Kraftfahrzeugen, sowie ein Verkleidungsteil mit einem solcherart hergestellten Formkörper.

Thermoplastische Formkörper, auch Formteile, Formfolien oder - häute, für die Innenverkleidung von Kraftfahrzeugen sind weithin bekannt und werden z. B. verwendet für die Innenverkleidung in Fahrzeugen, also als Überzug von Armaturenbrettern, Türeinsätzen, Sonnenblenden etc. eingesetzt. Solche Formkörper bestehen üblicherweise aus einer mehrschichtigen unterschäumten Kunststoff-Folie, die auf ihrer Oberseite eine dreidimensional strukturierte, geprägte Oberfläche aufweist, nämlich eine so genannte Musterung oder Narbung in verschiedensten Formen und Ausführungen.

Die Formkörper oder Formfolien bestehen oft aus einer kompakten Oberschicht, nämlich der Deck- oder Dekorschicht, die mit der geprägten oder eingeformten Oberfläche versehen ist, und aus einer auf der Unterseite auflaminierten / aufgeklebten Schaumschicht niedriger Dichte als Unterschicht, die eine ansprechende Haptik, d.h. eine angenehm "weiche" Griffigkeit des Bezuges bereitstellt. Dabei ist die Oberschicht auch als "Kompaktfolie" bekannt.

Sowohl die Oberschicht als auch die Unterschicht der Formkörper können dabei aus unterschiedlichen Zusammensetzungen und unterschiedlichen Basisrohstoffen bestehen, also etwa aus Kunststoffen wie PVC (Polyvinylchlorid), PP (Polypropylen), TPO (Polyolefin) etc. oder einer Kombination aus solchen oder ähnlichen Materialien.

Im Stand der Technik sind zur Herstellung solcher Formkörper verschiedene Verfahren bekannt, zum Beispiel das Standard-Tiefziehverfahren, bei dem das Einformen einer vorher hergestellten und durch Walzverfahren mit einer Oberflächen-Prägung oder - Narbung versehenen Folie in eine dreidimensionale, bauteil-geometrische Struktur durch das Einfahren eines die spätere Bauteilkontur bildenden Tiefziehstempels in die Folie erfolgt.

Ein weiteres und hier besonders interessantes Verfahren zur Herstellung von werkzeugfallenden einzelnen Formkörpern ist das "Inmould-Graining-Verfahren (IMG-Verfahren)", welches sich als Spezialverfahren aus dem Negativ-Tiefziehverfahren entwickelt hat. Dieses Inmould-Graining-Verfahren, bisher im Wesentlichen mit seinem englischsprachigen Begriff bekannt, lässt sich wohl am besten mit dem Begriff" narbgebendes Negativtiefziehen" übersetzen.

Beim Negativtiefziehen wird eine Folie in eine Negativform hineingezogen, beispielsweise durch Vakuum. Das narbgebende Negativtiefziehen ist nun eine besondere Ausgestaltung des Negativtiefziehens, in dem nicht nur die bauteil-geometrische Struktur, sondern auch die spätere Narbstruktur als Negativ in die Werkzeugoberfläche eingebracht wird.

Die Anforderung an das Ausgangsmaterial sind beim Standardziehverfahren und beim narbgebenden Negativtiefziehen dementsprechend unterschiedlich.

Beim Standardziehverfahren ist die Folie bereits mit eine Narbung , d.h. mit einer durch ein vorhergehendes Walzverfahren durchgeführten Oberflächen-Prägung versehen. Diese Narbung darf durch das Strecken der Folie beim Tiefziehprozess nicht zerstört oder verändert werden. Dazu muss die Folie und ihre Narbung so stabil sein, dass eine solche Schädigung sicher vermieden wird. Um diese Stabilität zu erreichen, wird die Folie im Stand der Technik vor dem Tiefziehen vernetzt, etwa durch zugegebene Additive als Vernetzungshilfsmittel oder durch eine vor dem Tiefziehen erfolgende Elektronenstrahlvernetzung.

Im Gegensatz dazu muss das Ausgangsmaterial der Folien beim narbgebenden Negativtiefziehen niedrigviskos sein, um eine optimale Narbabbildung zu gewährleisten, d.h. um eine gute Narbübertragung vom Werkzeug auf die als Ausgangsmaterial genutzte Kunststoff-Folie zu bekommen. Beim narbgebenden Negativtiefziehen wird eine ungeprägte Folie nämlich erhitzt und dann mittels Vakuum in eine dreidimensionale Form gezogen, die das gewünschte Narbbild als Negativ enthält. Natürlich muss dieses Folienteil aber auch thermisch stabil sein, um die Alterungsanforderungen sowie die Forderungen hinsichtlich der thermischen Beständigkeit während des späteren Einsatzes zu erfüllen.

Im Automobilbereich werden in den unterschiedlichsten Bereichen Formkörper aus/mit Folien und Folienlaminate eingesetzt, die auf Polyolefinen basieren. So werden z. B. insbesondere im Bereich von Automobil-Innenverkleidungen Folien oder Folienlaminate aus Polyolefinen durch die oben beschriebenen Tiefziehprozesse oder andere verformende Prozesse weiterverarbeitet, um die gewünschte Form, beispielsweise die Form eines Dachhimmels oder einer Türverkleidung zu erhalten.

An die Folien oder Folienlaminate werden hohe Anforderungen hinsichtlich ihrer chemischen und physikalischen Eigenschaften gestellt, so sollen sie z. B. gut verarbeit-, laminier- und prägbar sein, eine hohe Gebrauchstüchtigkeit, d.h. eine hohe Abrieb- und Kratzbeständigkeit, eine hohe Medienbeständigkeit, eine hohe Initialmattigkeit und nach der Verarbeitung eine gute Narbstabilität und eine weiterhin gleichbleibend hohe Mattigkeit aufweisen.

Im Bereich des Automobilinterieurs ist zudem ein starker Trend zur Verbesserung der Qualitätsanmutung zu beobachten. Dieser Trend hat dazu geführt, dass bei vielen der typischen Folienanwendungen in Form von Formkörpern im Dekorbereich Kriterien wie die Griffigkeit, das "Anfühlen" (Haptik) und das gesamte optische und taktile Erscheinungsbild einen sehr hohen Stellenwert in der Beurteilung durch die Kunden gewonnen haben. Demzufolge dürfen die Oberflächen auch nicht zu sehr glänzen, sondern müssen einen gewisse angenehme "matten Glanz" aufweisen, dürfen auch bei starker Sonneneinstrahlung nicht reflektieren und müssen kratzbeständig und auch nach langem Einsatz noch ansehnlich sein.

Um bei Dekorfolien ein angenehmes Griffempfinden oder eine gewünschte Berühr-Haptik zu generieren, wird, wie oben bereits dargestellt, die zu kaschierende Folie häufig rückseitig mit einer geschäumten Unterfolie versehen, wobei der Schaum gleichzeitig noch eine Schutzfunktion für die Dekorfolie gegenüber dem rückseitig auf die Folie gepressten Trägermaterial bietet. Als Schäume für die Folienlaminate finden primär Polyolefinschäume Anwendung, basierend vorrangig auf Polyethylen und/oder Polypropylen.

Ein Verfahren zur Herstellung von genarbten Folien wird in der EP-A-1 149 858 beschrieben. Es werden Dekorfolien auf Polyolefinbasis für Anwendungen im Automobilinterieur offenbart, bei denen Kriterien wie Narbstabilität, Narbhomogenität nach dem Verformprozess, Haptik, Alterungsstabilität, Lichtechtheit, Emissionsarmut usw. von großer Bedeutung sind. Bei dem dort offenbarten Verfahren zur Herstellung der Folie wird aus unvernetzten Polyolefinen und ggf. weiteren Additiven eine Folie hergestellt. Diese Folie wird geprägt und zum Erzielen einer für ein Tiefziehverfahren geeigneten Narbstabilität mit Elektronenstrahlen behandelt. Die behandelte und genarbte Folie wird dann zu einem Formkörper tiefgezogen. In der EP-A-1 149 858 wird auch die Möglichkeit angesprochen, dass die für die Ausbildung der Folie verwendete Polyolefinmasse einen geringen Anteil (weniger als 10 %) an vorvernetzten Polymeren enthalten kann, was mit einem Gelgehalt der Folie von deutlich weniger als 3 Gew.-% einhergeht. Durch die nachträgliche Vernetzung durch Elektronenstrahlen wird sichergestellt, dass eine sehr homogene Verteilung der Netzknoten sichergestellt wird, was für eine sehr gute Narbstabilität der geprägten Oberflächen essentiell ist. Gleichzeitig wird durch die nachträgliche Vernetzung sichergestellt, dass die Herstellung der genarbten Folie nicht durch eine großflächige Vorvernetzung (dynamische Vernetzung) während der Folienextrusion wie sie beispielsweise in DE 4421128A1 beschrieben wird, beeinträchtigt wird.

Die in der EP-A-1 149 858 beschriebenen Polyolefine weisen verglichen mit anderen Materialklassen jedoch den großen Nachteil auf, dass sie ausgesprochen sensibel gegenüber der Einwirkung von kratzenden Oberflächeneinflüssen sind. Üblicherweise wird zur Messung der Kratzbeständigkeit für Dekoroberflächen im automobilen Innenraum eine Kratzprüfung mittels des Erichsenstabes 318 eingesetzt. Die Mindestanforderung liegt hier bei einer Beständigkeit von mindestens 3N, was durch Polyolefin-Materialien für dekorative Oberflächen im Automobilinnenraum nicht erreicht wird.

Die DE 4423882 und DE 4423883 offenbaren eine Folienzusammensetzung mit erhöhter Narbstabilität und hoher Mattigkeit. Dieses wird erreicht durch den Einsatz einer vernetzten PP-EPDM Mischung sowie einer Oberfolie enthaltend u.a. reaktive Gruppen enthaltende Polymere. Allerdings reicht die Mattigkeit solcher Folien nach dem Tiefziehen bei weitem nicht aus, um die Anforderungen der modernen Automobilkunden nach extrem matten Oberflächen insbesondere nach dem Verformprozess zu erfüllen. Durch den Einsatz von polaren Polymeren wie beispielsweise hier den Ionomeren wird die Kratzbeständigkeit der Oberfläche zwar erhöht, allerdings weisen diese Polymere aufgrund ihres niedrigen Schmelzpunktes in hohem Maße eine Problem mit dem Glanzgrad insbesondere nach thermischer Belastung auf. Dieses Problem kann dadurch abgemildert werden, dass man, wie in DE 4423882 beschrieben, die Carboxylatgruppen der Ionomere beispielsweise mit epoxidgruppenhaltigen Polymeren während der Extrusion vernetzt.

Nachteilig dabei ist allerdings, dass dadurch die dynamische Vernetzung während des Extrusionsprozesses und dem damit verbundenen Viskositätsanstieg die Extrusionstemperaturen und- drücke extrem ansteigen, nämlich bis zur Überlastung des Extruders. Auch führen Temperatur- und Durckanstieg zu einem hohen Energieverbrauch bei der Extrusion. Zudem kann die Temperaturerhöhung zu einer Polymerschädigung führen. Weiterhin führt die hohe Folienviskosität zu Problemen bei dem im weiteren folgenden Prägeschritt, also das Einbringen einer Narbe in die Folienoberfläche. Durch die hohe Folienviskosität wird die Güte der Narbübertragung vom Prägewerkzeug entscheidend negativ beeinträchtigt.

Problematisch ist dabei auch, dass durch die hohe Folienviskosität bei Folien, die beim Prägeschritt bereits erhebliche Anteile an vernetzten Strukturen aufweisen, die eingebrachte Narbinformation beim erneuten Erhitzen der Oberfläche, wie es üblicherweise bei den Verformvorgängen der Folie im Rahmen der Bauteilherstellung geschieht, wieder verlorengeht ("Memory Effekt").

Neben den genannten Effekten führt die erhöhte Viskosität der vorvernetzten Materialien ebenfalls zu einer entscheidenden Reduktion der Fertigungsgeschwindigkeiten und damit zu einer signifikanten Produktverteuerung.

Wie bereits oben erwähnt, ist es durch die höheren Anforderungen an die Qualitätsanmutung für den Einsatz von Folien im automobilen Innenraum wesentlich, dass die Folien eine hohe Weichheit aufweisen. Dazu werden üblicherweise polyolefinische Kautschuke eingesetzt. Allerdings verringert sich damit die Narbbeständigkeit aufgrund des geringen Schmelzpunktes dieser Komponenten, die sich üblicherweise signifikant unterhalb der Verarbeitungstemperaturen dieser Folien von > 130°C befindet. Um diesen Nachteil aufzufangen werden der Polymermischung üblicherweise hohe Mengen an kristallinen Polymeren wie Polypropylen hinzugegeben, was die Materialsteifigkeit nachteilig beeinflusst.

Die US 6,207,761 B1 offenbart für die Herstellung einer Folie einen thermoplastischen Ionomerblend, enthaltend
a) 15-85% eines carboxylgruppenhaltigen thermoplastischen Polymers
b) 10-80% eines thermoplastischen Elastomers aus der Gruppe der vernetzten Ethylen-Propylen Copolymeren, Acrylnitril-Butadien-Copolymeren, Styrol-Butadien-Copolymeren und Styrol-Acrylnitril Pfropfcopolymerer, und
c) 5-40% eines Polyethylen oder Polypropylens

Die US 2008/193684 A1 offenbart ein Verfahren zu Herstellung von thermoplastischen Formteilen (*moldings*), Formhäuten oder -Folien mit einer dreidimensionalen Narbung der Oberfläche, wobei das Formteil einer Vorwärmung bis auf eine Temperatur unterzogen wird, bei dem das Formteil thermoplastisch verformbar wird. Danach wird das Formteil mittels Unterdruck und/oder Formwerkzeugen in/auf eine aufnehmende Form (*female tool*) gepresst, wobei die Oberfläche der Form das Negativ der aufzubringenden dreidimensionalen Oberflächenstruktur beinhaltet, wodurch das Formteil sowohl die gewünschte geometrische Form erhalt als auch mit der gewünschten positiven Oberflächenstruktur geprägt wird. Das Formteil wird dabei während oder vor der Vorwärmung und dem Tiefziehen bzw. der vor der Oberflächenprägung einer Elektronenstrahlvernetzung unterworfen, die im Wesentlichen nur die Teile des Formteils vernetzt, die der späteren Narbseite abgewandt sind und somit nur in geringem Ausmaß mit der dreidimensionalen Oberflächenstruktur geprägt werden.

Diese letztgenannten Folienzusammensetzungen zeichnen sich zwar durch eine recht hohe Kratzfestigkeit aus, weist allerdings einen für den automobilen Innenraum nicht akzeptablen Glanzgrad auf.

Für die Erfindung bestand also die Aufgabe, ein Verfahren zur Herstellung eines Formkörpers anzugeben, das eine verbesserte Narbabformung erlaubt, das eine hohe Narbstabilität erzeugt und eine sichere Verarbeitung erlaubt und das eine Oberfläche des Formkörpers mit ausreichend mattem Glanz, d.h. "Mattigkeit" und einer hohen Kratzbeständigkeit sicherstellt.

Gelöst wird diese Aufgabe durch die Merkmale des Hauptanspruchs. Weitere vorteilhafte Ausbildungen sind in den Unteransprüchen offenbart. Ebenfalls ist ein Verkleidungsteil mit einem solchen Formkörper offenbart.

Das erfindungsgemäße Verfahren weist dabei die folgenden Verfahrensschritte auf:
ein Ausgangsmaterial, welches als wesentliche Bestandteile unvernetzte Polyolefine und unvernetzten Ionomere und ggf. weitere Additive enthält, wird gemischt, mit einem Extruder als flächiger Folienkörper extrudiert und so als flächige Folie - als flächiger Folienkörper - ausgebracht, anschließend wird die Folie zur Herstellung der dreidimensional strukturierten Oberfläche und zur Bildung des Formkörpers in einem narbgebenden Negativ-Tiefziehverfahren in eine Bauteilform tiefgezogen, welche das gewünschte Narbbild als Negativ enthält.

Durch die Verwendung eines Ausgangsmaterial, welches als wesentliche Bestandteile ausschließlich unvernetzte Polyolefine und ausschließlich unvernetzten Ionomere enthält, und durch die erfindungsgemäßen Verfahrensschritte, erhält man einen Formkörper mit einer Oberfläche, deren Kratzfestigkeit/Kratzbeständigkeit geprüft nach Erichsen 318 mit einem Nadeldurchmesser von 0,75 mm mindestens 3N oder mehr beträgt. Außerdem weist überraschenderweise die Oberfläche der so hergestellten Formkörper einen Glanzgrad, gemessen unter einem Winkel von 60° mit einem Gerät Byk Mikro Gloss, von höchstens 2,0 auf, regelmäßig sogar kleiner als 1,5 und oft kleiner als 1,0 auf.

Eine Extrusion der Folieist bei dem hier eingesetzten Ausgangsmaterial völlig unproblematisch, weil keine dynamische Vernetzungen während des Extrusionsprozesses entstehen können.

Eine weitere vorteilhafte Ausbildung besteht darin, dass die Folie mehrlagig als Folienverbund ausgebildet ist und aus einer Oberfolie und ein oder mehreren unteren Folien besteht. Hierdurch ergibt sich eine sehr gut Möglichkeit zur Anpassung der Folieneigenschaften auf den Verwendungszweck.

Eine weitere vorteilhafte und für die gewünschte Oberflächenbeschaffenheit völlig ausreichende Ausbildung besteht dabei darin, dass ausschließlich die Oberfolie unvernetzte Ionomere enthält.

Eine weitere vorteilhafte Ausbildung besteht darin, dass die Dicke der Oberfolie zwischen 50 µm bis 800µm beträgt. Dadurch lassen sich Festigkeiten und die Narbstabilität der Folien ausreichend für die unterschiedlichen Verfahrensparameter und Anwendungen variieren.

Eine Ausbildung im Sinne erhöhter Kratzbeständigkeit besteht darin, dass der Ionomergehalt der Folie - auch der Oberfolie - zwischen 25% und 95 % liegt, vorzugsweise zwischen 40% und 75% .

Eine weitere vorteilhafte Ausbildung im Sinne der Verbesserung von Kratzbeständigkeit, Narbstabilität und Glanzgrad besteht darin, dass das Ionomer Ethylen und/oder Propylen sowie eine α, β-ungesättigte Carbonsäure und/oder einer Sulfonsäure enthält.

Eine weitere vorteilhafte Ausbildung im Sinne der Verbesserung von Kratzbeständigkeit, Narbstabilität und Glanzgrad besteht darin, dass das Ionomer Ethylen sowie mindestens 9% einer α, β-ungesättigtem Carbonsäure bzw. Sulfonsäure enthält, wobei die Säuregruppen zu 20 bis 90 % mit Zink- oder Natrium-Ionen neutralisiert sind.

Eine weitere vorteilhafte Ausbildung im Sinne der Verbesserung insbesondere der Mattigkeit, d.h. der Verringerung von unerwünschten Glanzeffekten besteht darin, dass die durchschnittliche Domänengröße der eingesetzten Polyolefinkomponenten kleiner als 20 µm, besonders bevorzugt kleiner als 5 oder kleiner als 2µm ist. Größere Domänengrößen sind sicher möglich, jedoch werden im Stand der Technik bei Mischungen lediglich Domänengrößen von kleiner als 100µm erreicht, was diese besonders gewünschte Mattigkeit in der Regel nicht erreichen lässt.

Eine weitere vorteilhafte Ausbildung im Sinne einer gesteigerten weichen Griffigkeit besteht darin, dass die Folie mit einer rückseitigen Schaumschicht bzw. Schaumfolie versehen wird.

Insbesondere geeignet ist ein solcher Formkörper für ein Verkleidungsteil für den Innenraum eines Fahrzeuges, welches aus einer Trägerstruktur und dem darauf aufgebrachten und erfindungsgemäß hergestellten Formkörper besteht.

## Patentansprüche

1. Verfahren zur Herstellung eines Formkörpers mit einer dreidimensional strukturierten Oberfläche für die Innenverkleidung von Kraftfahrzeugen, welches die folgenden Verfahrensschritte aufweist:
- ein Ausgangsmaterial, welches als wesentliche Bestandteile unvernetzte Polyolefine und unvernetzten Ionomere und ggf. weitere Additive enthält, bei dem der Ionomergehalt der Folie zwischen 25% und 95% liegt, wird gemischt und mit einem Extruder als flächiger Folienkörper extrudiert,
- die Folie wird anschließend zur Herstellung der dreidimensional strukturierten Oberfläche und zur Bildung des Formkörpers in einem narbgebenden Negativ-Tiefziehverfahren in eine Bauteilform tiefgezogen, welche das gewünschte Narbbild als Negativ enthält.

2. Verfahren nach Anspruch 1, bei dem die Folie mehrlagig als Folienverbund ausgebildet ist und aus einer Oberfolie und ein oder mehreren unteren Folien besteht.

3. Verfahren nach Anspruch 2, bei dem ausschließlich die Oberfolie unvernetzte Ionomere enthält.

4. Verfahren nach Anspruch 2 oder 3, bei dem die Dicke der Oberfolie zwischen 50 µm bis 800 µm beträgt.

5. Verfahren nach einem der Ansprüche 1 bis 4, bei dem das Ionomer Ethylen und/oder Propylen sowie eine α, β-ungesättigte Carbonsäure und/oder einer Sulfonsäure enthält.

6. Verfahren nach einem der Ansprüche 1 bis 5, bei dem das Ionomer Ethylen sowie mindestens 9% einer α, β-ungesättigtem Carbonsäure bzw. Sulfonsäure enthält, wobei die Säuregruppen zu 20 bis 90 % mit Zink- oder Natrium-Ionen neutralisiert sind.

7. Verfahren nach einem der Ansprüche 1 bis 6, bei dem die durchschnittliche Domänengröße der eingesetzten Polyolefinkomponenten kleiner als 20µm ist.

8. Verfahren nach einem der Ansprüche 1 bis 7, bei dem die Folie mit einer rückseitigen Schaumschicht bzw. Schaumfolie versehen wird.

## Claims

1. Process for producing a moulding with a three-dimensionally structured surface for the interior cladding of motor vehicles, which has the following steps:
- a starting material which comprises uncrosslinked polyolefins as essential constituents and uncrosslinked ionomers and optionally other additives, in which the ionomer content of the foil is between 25% and 95%, is mixed and is extruded by an extruder to form a sheet-like foil structure,
- the foil is then thermoformed in a grain-forming negative deep-drawing process in a component mould, which contains the desired grain pattern as a negative to produce the three-dimensionally structured surface and to form the foil structure,

2. Process according to Claim 1, in which the foil takes the form of a foil composite having a plurality of layers and is composed of an upper foil and of one or more lower foils.

3. Process according to Claim 2, in which, exclusively the upper foil comprises uncrosslinked ionomers.

4. Process according to Claim 2 or 3, in which the thickness of the upper foil is from 50 *µ*m to 800 *µ*m.

5. Process according to any of Claims 1 to 4, in which the ionomer comprises ethylene and/or propylene, and also an α,β-unsaturated carboxylic acid and/or a sulphonic acid.

6. Process according to any of Claims 1 to 5, in which the ionomer comprises ethylene, and also at least 9% of an α,β-unsaturated carboxylic acid or sulphonic acid, where from 20 to 90% of the acid groups have been neutralized with zinc ions or with sodium ions.

7. Process according to any of Claims 1 to 6, in which the average domain size of the polyolefin components used is smaller than 20 *µ*m.

8. Process according to any of Claims 1 to 7, in which the upper foil is provided with a reverse-side foam layer or foam foil.

## Revendications

1. Procédé de fabrication d'un corps moulé ayant une surface structurée tridimensionnellement pour le revêtement intérieur d'automobiles, qui comprend les étapes de procédé suivantes :
- un matériau de départ, qui contient en tant que constituants essentiels des polyoléfines non réticulées et des ionomères non réticulés et éventuellement des additifs supplémentaires, dans lequel la teneur en ionomères du film est comprise entre 25 % et 95 %, est mélangé et extrudé en un corps en film plat avec une extrudeuse,
- le film est ensuite embouti pour la fabrication de la surface structurée tridimensionnellement et au cours d'un procédé d'emboutissage négatif conférant un relief pour mettre le corps moulé sous la forme d'un élément qui contient, en tant que partie négative, le relief souhaité.

2. Procédé selon la revendication 1, dans lequel le film est formé de plusieurs couches sous la forme d'un composite en film et est constitué d'un film supérieur et d'un ou de plusieurs films inférieurs.

3. Procédé selon la revendication 2, dans lequel seul le film supérieur contient des ionomères non réticulés.

4. Procédé selon la revendication 2 ou 3, dans lequel l'épaisseur du film supérieur est comprise entre 50 *µ*m et 800 *µ*m.

5. Procédé selon l'une quelconque des revendications 1 à 4, dans lequel l'ionomère contient de l'éthylène et/ou du propylène, ainsi qu'un acide carboxylique α,β-insaturé et/ou un acide sulfonique.

6. Procédé selon l'une quelconque des revendications 1 à 5, dans lequel l'ionomère contient de l'éthylène et au moins 9 % d'un acide carboxylique α,β-insaturé ou d'acide sulfonique, les groupes acides étant neutralisés à hauteur de 20 à 90 % avec des ions zinc ou sodium.

7. Procédé selon l'une quelconque des revendications 1 à 6, dans lequel la taille moyenne de domaine des composants polyoléfines utilisés est inférieure à 20 *µ*m.

8. Procédé selon l'une quelconque des revendications 1 à 7, dans lequel le film est muni d'une couche de mousse ou d'un film de mousse sur le côté arrière.
